# EUROPÄISCHE PATENTSCHRIFT

(11) **EP 3 103 331 B1**
(45) Veröffentlichungstag und Bekanntmachung des Hinweises auf die Patenterteilung: **16.01.2019**
(21) Anmeldenummer: 15171664.4
(22) Anmeldetag: 11.06.2015
(51) Int. Cl.: A01L 3/00, A01L 5/00

(54) **BESCHLAG FÜR EINEN HUF UND VERFAHREN ZUM BESCHLAGEN EINES HUFES**
FITTING FOR A HOOF AND METHOD FOR FITTING A HOOF
FER À CHEVAL ET PROCÉDÉ DE FERRAGE D'UN SABOT

(43) Veröffentlichungstag der Anmeldung: 14.12.2016
(73) Patentinhaber: huf-atelier, 85716 Riedmoos (DE); Götz, Joachim, 92249 Vilseck (DE)
(72) Erfinder: Roncassaglia, Christian, 85716 Riedmoos (DE)
(74) Vertreter: Maiwald Patent- und Rechtsanwaltsgesellschaft mbH

(56) Entgegenhaltungen:
- WO-A1-00/54577
- WO-A1-2009/061510
- DE-A1- 19 742 274
- FR-A1- 2 459 614
- US-A- 1 761 241
- US-A- 5 842 523

## Beschreibung

### Gebiet der Erfindung

Die Erfindung betrifft einen Beschlag für einen Huf eines Equiden, z.B. eines Pferdes, und ein Verfahren zum Beschlagen eines Hufes eines Equiden, z.B. eines Pferdes, mit einem Beschlag bzw. ein temporäres Anbringen eines Beschlages.

### Hintergrund der Erfindung

Es ist bekannt, einen Hufbeschlag, z.B. ein Hufeisen, an einen Huf eines Pferds zu nageln oder zu kleben, wobei in beiden Fällen der Hufbeschlag für eine komplette Beschlags-Periode von ca. vier bis sieben Wochen am Huf des Pferds bleiben soll. Eine Verbindung zwischen Hufbeschlag und Huf wird somit durch Nägel oder Klebstoff hergestellt. Beim Wechseln des Hufbeschlags wird der alte Hufbeschlag abgenommen und anschließend nach fachgerechter Bearbeitung des Hufes ein neuer Hufbeschlag mit einer neuen Verbindung aus Nägeln oder Klebstoff an dem Huf des Pferds befestigt.
Beim Nageln wird im Zuge der Befestigung des Hufbeschlags am Huf durch die Nägel die Hufwand des Pferds teilweise zerstört, so dass potentielle Angriffsflächen für eine weitere Zerstörung (z.B. mechanisch oder biologisch) verursacht werden. Ebenso können dadurch im weiteren Verlauf Infektionen den Organismus des Pferds stark belasten.

Beim Kleben, vor allem wenn Zwei-Komponenten-Kleber, z.B. Epoxylharz-Kleber, zum Einsatz kommen, können die äußeren Hornschichten auf Dauer angegriffen werden, womit ähnliche Nachteile wie beim Nageln verbunden sind. Weiterhin ist die Klebe-Technik mit relativ hohen Kosten verbunden, ist sehr zeitaufwendig und erfordert viel Expertise bei der Durchführung. Aus der US 1 761 241 A ist ferner ein Hufeisen mit drei daran lösbar befestigten L-förmigen Fingern bekannt, welche zur Befestigung an einem Huf mehrere nach innen orientierte Zähne und Zacken aufweisen. Weiterhin weist das Hufeisen eine elastische Lauffläche auf.
Die auf dem Markt gängigen Beschläge schränken oftmals die natürlichen Funktionen de Hufes ein. Retardierende Strukturen, welche essentielle Funktionen haben, sind die Folge. Die konsequente Forderung daraus muss ein Hufschutz sein, der sowohl den Huf vor übermäßigem Abrieb schützt und zugleich die natürlichen Funktionen der unterschiedlichen Strukturen des Hufes erhält und fördert. Darüber hinaus sollte das Anbringen und das Abnehmen des Beschlages nicht zu Zerstörungen am Huf führen, da dies weiterreichende, evtl. mit Schmerzen verbundene, negative Folgen für die Gesunderhaltung des Pferdes haben kann.

### Zusammenfassung der Erfindung

Die Aufgabe der vorliegenden Erfindung kann daher darin bestehen, einen Beschlag für einen Huf eines Equiden, z.B. eines Pferds, und ein Verfahren zum Beschlagen eines Hufs eines Equiden, z.B. eines Pferds, bereitzustellen, welche ein schnelles, einfaches und für das Pferd schonendes Beschlagen und Wechseln des Beschlags ermöglichen, ohne während einer Beschlagsperiode die Verbindung des Beschlages zum Huf erneuern zu müssen, wenn Bedarf besteht den Beschlag abzunehmen und wieder anzubringen.
Die Aufgabe wird gelöst durch die Gegenstände der unabhängigen Patentansprüche. Bevorzugte Ausführungsformen sind Gegenstand der abhängigen Ansprüche.
Der erfindungsgemäße Beschlag für einen Huf eines Equiden, z.B. eines Pferdes, nach Anspruch 1 umfasst eine Grundplatte und Aufzüge. Die Grundplatte ist dabei mit den Aufzügen verbunden. Die Aufzüge weisen Hufwand-Befestigungsmittel auf, welche dazu eingerichtet sind, die Aufzüge reversibel lösbar an einer Hufwand des Equiden, z.B. des Pferdes zu befestigen.
Im Folgenden wird die Erfindung im Zusammenhang mit der Anwendung an einem Pferd beschrieben. Die gemachten Ausführungen gelten jedoch auch für andere Equiden.
Mit anderen Worten ist der erfindungsgemäße Beschlag ein modulares System, welches die Module Grundplatte und Aufzüge umfasst. Das modulare System ermöglicht es einem Anwender gezielt und sinnvoll oft während einer Beschlagsperiode den Beschlag an der Hufwand eines Pferds zu befestigen und von der Hufwand wieder zu lösen. Das modulare System erlaubt, einen Hufbeschlag an einem Pferd wechseln zu können, ohne dass eine Verbindung zwischen Hufbeschlag und Hufwand des Pferdes während einer Beschlagsperiode zwingend erneuert werden muss. Dies spart Zeit, ist einfach und schont das neu zu beschlagende Pferd. Außerdem erlaubt das modulare System den Beschlag individuell auf die vorhandenen Hufverhältnisse einzustellen.
Die Grundplatte ist bevorzugt an einen zuvor fachgerecht vorbereiteten Huf angepasst und kann ferner eine Form aufweisen, welche dem unteren Querschnitt eines zu beschlagenden Hufs nachempfunden ist, wobei die äußeren Ränder entlang der äußeren unteren Ränder einer Hufwand (Seitenwände des Hufes) und im Trachtenbereich des Hufs etwas weiter überstehend verlaufen. Ferner erlaubt eine besonders bevorzugte Ausführungsform des Aufzugs bzw. der Aufzüge (2-flügeliger vorderer Aufzug der Zehenwand) eine Positionierung des Hufes im Beschlag, bei der die Zehenwand des Hufes über den Beschlag hinausreichen kann. Diese Positionierung unterstützt den natürlichen Abrollpunkt des Hufes am Boden.
Unter einem Aufzug ist ein Verbindungselement zwischen der Hufwand des Pferdes und der Grundplatte des Beschlags zu verstehen. Der wenigstens eine Aufzug ist derart geformt und dazu eingerichtet, dass er der Grundplatte und an der Hufwand derart befestigt werden kann, dass der Hufbeschlag am Huf des Pferdes, zur Hufform passend zum Anliegen kommen kann und der Huf des Pferdes somit beschlagen ist.

Der wenigstens eine Aufzug kann beispielsweise durch eine Befestigungslasche gebildet werden, wobei die Befestigungslasche Anbindungsflächen zur Anbringung der Hufwand-Befestigungsmittel und Anbringungsflächen für weitere Befestigungsmittel zur Verbindung mit der Grundplatte aufweist, z.B. Mittel zur Verrastung. Der wenigstens eine Aufzug kann gezielt an Positionen vorgesehen werden, welche für einen sicheren Halt des Beschlages maßgeblich sind. Die Verbindung zwischen dem wenigstens einen Aufzug und der Grundplatte kann beispielsweise und nicht erfindungsgemäß dadurch erfolgen, dass jeweils ein Teil des wenigstens einen Aufzugs um einen Rand der Grundplatte verläuft und an der Unterseite der Grundplatte befestigt ist, z.B. durch Einklicken in ein spezielles Profil. Hierbei meint die Unterseite der Grundplatte diejenige Seite, welche dem Huf des Pferds abgewandt ist, wenn der Beschlag an dem Huf des Pferds befestigt und das Pferd somit beschlagen ist.
Unter die Hufwand-Befestigungsmittel fallen z.B. zweiteilige Verschluss-Mechanismen, wobei jeweils einer der zwei Teile an einem der zu verbindenden Elemente angeordnet ist, in diesem Fall an dem wenigstens einen Aufzug und der Hufwand des zu beschlagenden Pferds. Unter die Hufwand-Befestigungsmittel fallen z.B. Klettverschlüsse, Einrastverschlüsse oder Klickverschlüsse. Dass der Aufzug bzw. die Aufzüge reversibel lösbar mit der Hufwand verbunden werden können, bedeutet, dass eine temporäre Verbindung hergestellt werden kann, welche sinnvoll und beliebig oft während einer Beschlagsperiode lösbar ist, ohne die Verbindung zu zerstören.
Der erfindungsgemäße Beschlag ermöglicht eine besonders schnelle und einfache Handhabung. Der Hufbeschlag kann sinnvoll oft während einer Beschlagsperiode gewechselt werden, ohne die Verbindung zwischen Beschlag und Hufwand des Pferds erneuern zu müssen. Dadurch kann die Belastung der Hufwand des Pferdes besonders gering gehalten werden. Weiterhin kann der gesamte Beschlag in besonders kurzer Zeit abgenommen / angebracht und wieder angebracht / abgenommen werden.

Gemäß einer bevorzugten Ausführungsform weist die Grundplatte Applikations-Befestigungsmittel auf, welche dazu eingerichtet sind, eine Applikation reversibel lösbar an der Grundplatte zu befestigen. Alternativ können die Applikationen auch dauerhaft fest an der Grundplatte befestigt werden. Es können auch mehrere verschiedene Applikationen auf diese Weise an der Grundplatte befestigt werden. Bei den genannten Applikationen handelt es sich um solche, welche von orthopädisch sinnvoller Natur sind, z.B. dämpfende KunststoffElemente in Hufeisenform oder strahlunterstützende Kissen. Dabei können an das modulare System besonders variabel Applikationen aus verschiedensten Materialien, z.B. aus Kunststoff oder aus Materialien, welche keinen punktuellen Druck verursachen, und unterschiedlichster Formen, z.B. in Hufeisenform, beliebig oft und besonders leicht angebracht sowie wieder davon getrennt werden. Unter die Applikations-Befestigungsmittel fallen z.B. zweiteilige Verschluss-Mechanismen, wobei jeweils einer der zwei Teile an einem der zu verbindenden Elemente angeordnet ist, in diesem Fall an der Applikation und an der Grundplatte. Unter die Hufbeschlag-Befestigungsmittel fallen z.B. Klettverschlüsse, Einrastverschlüsse oder Klickverschlüsse. Dass die Applikation reversibel lösbar mit der Grundplatte verbunden werden kann, bedeutet, dass eine temporäre Verbindung hergestellt werden kann, welche sinnvoll oft während einer Beschlagsperiode lösbar ist, ohne die Verbindung zu zerstören. Die Applikations-Befestigungsmittel sind derart an der Grundplatte angeordnet, dass die Applikation an einer für den Huf des Pferdes passenden Stelle positioniert werden kann. Die Applikations-Befestigungsmittel können weiterhin derart ausgestaltet und positioniert sein, dass Applikationen von unterschiedlicher Form an der Grundplatte und somit auch an dem Huf des zu beschlagenden Pferds befestigt werden können.

Gemäß der Erfindung ist vorteilhaft vorgesehen, dass die Hufwand-Befestigungsmittel einen Teil eines Klettverschlusses umfassen. Ein anderer Teil bzw. ein Gegenpart des Klettverschlusses kann dabei an der Hufwand des zu beschlagenden Pferds angebracht sein, so dass der Aufzug bzw. die Aufzüge mittels des Klettverschlusses reversibel lösbar an der Hufwand befestigt werden können. Bei Vorsehen eines Klettverschlusses kann z.B. ein erster Klettstreifen mit einem selbstklebenden Band beschichtet sein, welches an der Hufwand an Positionen angebracht wird, an denen eine Verbindung zwischen dem Aufzug bzw. den Aufzügen und der Hufwand vorgesehen ist. Ein zweiter Klettstreifen, welcher dazu eingerichtet ist, mit dem ersten Klettstreifen reversibel lösbar verbunden zu werden, kann in ähnlicher Weise ebenfalls mit einem selbstklebenden Band beschichtet sein, welches an dem Aufzug bzw. den Aufzügen derart befestigt ist, dass die ersten Klettstreifen und die zweiten Klettstreifen miteinander verbunden werden können.

In ähnlicher Weise ist vorteilhaft vorgesehen, dass die Applikations-Befestigungsmittel einen Teil eines Klickverschlusses umfassen. Ein anderer Teil bzw. ein Gegenpart des Klickverschlusses kann dabei an der Applikation angebracht sein, so dass die Applikation mittels des Klickverschlusses reversibel lösbar an der Grundplatte befestigt werden kann. Wenn das Eigengewicht des Pferdes auf dem Huf und damit auch auf der Applikation sowie der Grundplatte des Beschlags lastet, dann verstärkt das Eigengewicht des Pferds den Zusammenhalt der Klickverbindung zwischen der Applikation und der Grundplatte. Unter einem Klickverschluss wird in diesem Zusammenhang insbesondere ein zerstörungsfrei auflösbarer Formschluss zweier Elemente verstanden, wobei jeweils eines der Elemente mit einem der zu verbindenden Teile verbunden ist, z.B. der Hufwand und dem wenigstens einen Aufzug oder einer Applikation und der Grundplatte. Die erforderliche Kraft zum Auflösen des Formschlusses wird dabei durch Belastungen, welche bei normalen Bewegungsabläufen des Pferdes entstehen, nicht erreicht. Die vorstehend beschriebenen Klettverschlüsse, Einrastverschlüsse und Klickverschlüsse stellen kostengünstige Schnellverschlüsse dar und erlauben eine ausreichend feste sowie einfache Befestigung des Aufzugs bzw. der Aufzüge an einer Hufwand bzw. ein Abnehmen der Aufzüge von einer Hufwand. Das gleiche gilt für eine Befestigung der Applikationen an der Grundplatte. Somit leisten diese Ausführungsformen einen Beitrag, einen Hufbeschlag für ein Pferd besonders schnell, einfach, strukturschonend und kostengünstig wechseln zu können.

Die Aufzüge weisen einen winkelförmigen Querschnitt auf, wobei jeweils wenigstens ein Hufwand-Schenkel der Aufzüge zur Befestigung an der Hufwand des Pferdes eingerichtet ist und jeweils wenigstens ein Grundplatten-Schenkel der Aufzüge zur Befestigung an der Grundplatte eingerichtet ist.

Die Aufzüge sind soweit flexibel, dass sie leicht von der Hufwand wegbewegt werden können, um z.b. eine Klettverbindung zu lösen. Das Profil der Aufzüge kann beispielsweise einen im Wesentlichen L-förmigen Querschnitt aufweisen, wobei die Hufwand-Schenkel jeweils parallel zu der Hufwand eines zu beschlagenden Pferds verlaufen und die Grundplatten-Schenkel jeweils parallel zu der Grundplatte verlaufen.

Der Beschlag kann drei Aufzüge umfassen, wobei ein erster Aufzug an einem linken Randabschnitt der Grundplatte angeordnet ist, ein zweiter Aufzug an einem rechten Randabschnitt der Grundplatte angeordnet ist und ein dritter Aufzug an einem vorderen Randabschnitt der Grundplatte angeordnet ist. Der vordere Randabschnitt ist hierbei derjenige Randabschnitt der Grundplatte, welcher im Bereich einer Zehe eines Hufes angeordnet ist, wenn der Beschlag wie vorgesehen am Huf eines Pferdes befestigt ist. Durch die drei an den beschriebenen Positionen angeordneten Aufzüge kann ein Schutz gegen Verrutschen in den maßgeblichen Richtungen besonders effektiv verhindert werden.

Besonders vorteilhaft ist vorgesehen, dass der dritte Aufzug, welcher an dem vorderen Randabschnitt der Grundplatte angeordnet ist, zwei derart voneinander beabstandete Hufwand-Schenkel aufweist, dass ein vorderer Zehenbereich des Hufs des Pferds zumindest bereichsweise freigehalten wird, wenn der Beschlag an der Hufwand des Pferds befestigt und der Huf des Pferds somit beschlagen ist. Dadurch wird ein Beitrag geleistet, eine ergonomisch besonders vorteilhafte Abrollbewegung des Hufes des Pferdes zu gewährleisten.

Weiterhin können vorteilhaft auch insgesamt fünf Aufzüge vorgesehen sein, welche derart um den Rand der Grundplatte verteilt sein können, dass durch Anphasungen der Aufzüge (von unten gesehen) ein erleichtertes Abrollen des Hufs ermöglicht wird.

Gemäß einer weiteren Ausführungsform weist der Aufzug bzw. weisen die Aufzüge jeweils wenigstens eine Einkerbung im Bereich einer Verbindung mit der Grundplatte auf. Bevorzugt sind hierbei zwei seitlich nebeneinander angeordnete Einkerbungen in dem Grundplatten-Schenkel des wenigstens einen Aufzuges vorgesehen, wobei die Einkerbungen angrenzend an den Hufwand-Schenkel des wenigstens einen Aufzuges angeordnet sind. Die wenigstens eine Einkerbung bewirkt, dass sich der Grundplatten-Schenkel des wenigstens einen Aufzuges unter Zug- bzw.Schubbelastung seitlich besonders gut ausdehnen kann, und zwar auf eine elastische Art. Dies hat den Vorteil, dass Belastungen, welche während des Einsatzes des Beschlags entstehen, z.B. eine dynamische Belastung wenn das Pferd läuft oder eine statische Belastung, welche dadurch verursacht wird, dass die Hufwände im Laufe der Zeit wachsen, wenigstens zum Teil zu einer elastischen Ausdehnung des Aufzugs bzw. der Aufzüge führen, ohne dass die Verbindung des Aufzugs bzw. der Aufzüge an der Grundplatte oder der Hufwand gelockert wird. Lässt die Belastung nach, kann sich der wenigstens eine Aufzug wieder entsprechend zurück verformen, d.h. seitlich zusammenziehen. Diese horizontale Bewegung ist Teil eines den Pferdehuf gesunderhaltenden Hufmechanismus.

Die feste Verbindung zwischen der Grundplatte und den Aufzügen ist reversibel lösbar. Dies leistet einen weiteren Beitrag das Befestigungssystem in modularer Weise aufzubauen, wobei besonders flexibel Aufzüge ausgetauscht, entfernt oder hinzugefügt werden.

In diesem Zusammenhang weist die Grundplatte für jeden der Aufzüge einen Schacht zur bereichsweisen Aufnahme des Aufzuges auf, wobei der jeweilige Schacht und der jeweilige Aufzug dazu eingerichtet sind, reversibel lösbar miteinander verbunden zu werden. Bei Vorsehen von Aufzügen mit winkelförmigem Querschnitt können z.B. die Grundplatten-Schenkel der Aufzüge in die Schächte der Grundplatte gesteckt werden, wobei die Grundplatten-Schenkel in die Schächte der Grundplatte einrasten können und eine solche Verrastung dazu eingerichtet ist, wieder zerstörungsfrei aufgehoben zu werden. Ein frei auslaufendes Ende des Grundplatten-Schenkel kann dabei derart geformt sein, dass er keine Wandfläche des Schachts berührt, um die Einführung eines Werkzeugs zum Lösen der Verrastung zwischen Grundplatten-Schenkel und Schacht sowie zum Herausschieben des Grundplatten-Schenkels aus dem Schacht zu ermöglichen. Bevorzugt verjüngt sich der Querschnitt des Grundplatten-Schenkels dabei zu seinem offenen Ende hin, wohingegen den Schacht bildende Wandungen der Grundplatte parallel zueinander verlaufen, wodurch ein keilförmiger Freiraum zwischen den Wandungen des Schachts und dem Grundplatten-Schenkel entsteht, in welchen besonders vorteilhaft ein ebenfalls keilförmiges Werkzeug eingeführt werden kann.

Gemäß einer weiteren Ausführungsform ist vorgesehen, dass eine insbesondere elastische Strahlunterstützung an der Grundplatte zur Erzeugung eines Gegendrucks auf einem Strahl des Hufes eines zu beschlagenden Pferdes befestigt ist. Die Strahlunterstützung ist bevorzugt dazu eingerichtet, einen variabel einstellbaren Gegendruck je nach gewählter Höhe eines verwendeten Strahlpolsters auf dem Strahl zu erzeugen. Dies fördert das Strahlwachstum durch ausgeübten Druckreiz. Die Strahlunterstützung stellt eine Applikation dar und ist bevorzugt zwischen den offenen Enden der Hufwand im hinteren Bereich der Grundplatte befestigt und ist von der Grundplatte vertikal in Richtung des zu beschlagenden Hufes abgesetzt. Durch die Strahlunterstützung wird die Rückführung des Blutstroms zum Herzen ebenso wie die Verteilung von Lymphflüssigkeit im Körper des Pferds angeregt, was vorteilhaft für die Gesundheit des zu beschlagenden Pferds ist. In diesem Zusammenhang spricht man von der sogenannten "Hufpumpe". Auch wird dadurch die Durchblutung des Strahls selbst angeregt, was für eine Bildung von Strahlhom äußerst wichtig ist und somit zur Gesunderhaltung des gesamten Organismus des Pferds beiträgt. Auch die Strahlunterstützung kann reversibel lösbar auf der Grundplatte befestigt sein, z.B. mittels eines Klickverschlusses wie weiter oben im Zusammenhang mit der Verbindung zwischen der Applikation bzw. den Applikationen und der Grundplatte erläutert.

Die Grundplatte und der Aufzug bzw. die Aufzüge können weiterhin aus einem Kunststoff gefertigt sein. In die Grundplatte kann zur Stabilisierung ein Bügelelement , z.b. aus Karbon, eingebracht sein. Dadurch ist der Beschlag besonders leicht. Huf und Gelenke eines zu beschlagenden Pferds werden demnach durch die dem Kunststoff eigene hohe Dämpfung und des geringen Klirrfaktors geschont.

Außerdem ist vorteilhaft vorgesehen, dass die Grundplatte ein U-förmiges Versteifungselement zur Versteifung der Grundplatte aufweist. Das Versteifungselement kann einer Verbiegung des Beschlags entgegenwirken. Dadurch wird ein Beitrag geleistet, einen besonders stabilen Beschlag bereitzustellen, welcher eine lange Formstabilität aufweist und damit den nachwachsenden Hufstrukturen die nötige gleichmäßige Unterstützung gibt. Das Versteifungselement kann aus einem faserverstärktem Kunststoff hergestellt sein, z.B. Karbon, wodurch insbesondere Gewicht eingespart werden kann. Weiterhin ermöglicht ein Versteifungselement aus Karbon, dass eine vertikale Bewegung der Hufwände zugelassen wird, was besonders vorteilhaft für einen gesunden und funktionierenden Hufmechanismus ist. Das Versteifungselement kann insbesondere in die Grundplatte verankert sein. Als Materialen kommen insbesondere solche mit hoher Steifigkeit zum Einsatz, z.B. Metalle, wobei leichtere Metalle, z.B. Aluminium - um Gewicht zu sparen - gegenüber schwereren Metallen, z.B. Eisen, besonders vorteilhaft sind. Das Versteifungselement kann auch Schächte zur Aufnahme der Aufzüge aufweisen, wenn es auf gleicher Höhe wie die Schächte in der Grundplatte positioniert werden soll, um z.b.die Dicke des Beschlages zu reduzieren. Die U-Form des Versteifungselementes kann auch durchbrochen sein, z.B. in Form von zwei oder mehr Schenkelabschnitten einer U-Form, aber ohne Verbindung zueinander.

Gemäß einer weiteren vorteilhaften Ausführungsform ist die Grundplatte hufeisenförmig und aus faserverstärktem Kunststoff, z.B. Karbon, gefertigt. Alternativ kann die Grundplatte auch aus Eisen, einem anderen Kunststoff oder einem anderen Metall, z.B. Aluminium, gefertigt sein. Wesentlich ist, dass die Grundplatte durch ihr Material eine besonders hohe Steifigkeit aufweist, ohne dass es zusätzlicher Versteifungselemente bedarf. Zudem ist die Grundplatte dabei besonders materialsparend ausgeführt, wodurch Gewicht und Kosten gespart werden. Die offen auslaufenden Enden der hufeisenförmigen Grundplatte können durch ein Brückenelement, z.B. aus einem Kunststoffmaterial, miteinander verbunden werden, wobei auf dem Brückenelement - insbesondere reversibel lösbar - Applikationen wie die oben beschriebene Strahlunterstützung befestigt sein können. Weiterhin können auf der Grundplatte Klickanschlüsse zum Einklicken weiterer Applikationen für den Beschlag angeordnet sein. An den Rändern dieser Version können direkt die Schächte zur Aufnahme der Aufzüge eingearbeitet sein, oder es sind Vertiefungen oder Durchbrüche auf der dem Boden zugewandten Seite ausgespart, um einen Aufzug bzw. mehrere Aufzüge einzuklicken.

Gemäß dem erfindungsgemäßen Verfahren zum Beschlagen eines Hufes eines Equiden, z.B. eines Pferds, mit einem Beschlag wird zunächst ein vorstehend beschriebener erfindungsgemäßer Beschlag bereitgestellt. Eine Grundplatte eines solchen Beschlags wurde zuvor an den Huf des Equiden angepasst und anschließend die Aufzüge an der angepassten Grundplatte befestigt. Anschließend werden Gegenparts zu Hufwand-Befestigungsmitteln des wenigstens einen Aufzugs an der Hufwand des Equiden angebracht. Danach erfolgt ein reversibel lösbares Befestigen des wenigstens einen Aufzugs an der Hufwand des Equiden mittels der Hufwand-Befestigungsmittel.
Gemäß einer Ausführungsform des erfindungsgemäßen Verfahrens erfolgt vor dem reversibel lösbaren Anbringen des wenigstens einen Aufzugs des Beschlags an der Hufwand des Equiden, z.B. des Pferds, mittels der Hufwand-Befestigungsmittel ein reversibel lösbares Befestigen von Applikationen an der Grundplatte, sofern notwendig.
Weiterhin können sich vorteilhaft zusätzlich die Verfahrensschritte anschließen, wonach ein reversibles Lösen der Befestigung des wenigstens einen Aufzuges von der Hufwand und ein reversibles Lösen der Befestigung der Applikation bzw. der Applikationen von der Grundplatte erfolgt. Dadurch ist eine zuvor an der Grundplatte befestigte wenigstens eine Applikation, welche durch Befestigen der Aufzüge an der Hufwand auch an dem Huf des zu beschlagenden Pferds angebracht war, wieder von dem Huf und ggfs. von der Grundplatte des Beschlags gelöst. Nachfolgend kann eine andere Applikation wie vorstehend beschrieben reversibel lösbar an der Grundplatte mittels der Applikations-Befestigungsmittel befestigt werden. Ähnliches gilt für einen Austausch des wenigstens einen Aufzuges. Diese Ausführungsform ermöglicht somit einen besonders schnellen, leichten und für das Pferd schonenden Austausch einer Applikation bzw. eines Aufzugs eines Hufbeschlags.

### Kurze Beschreibung der Figuren

Im Folgenden werden Ausführungsbeispiele der Erfindung anhand der Zeichnung näher erläutert. Hierbei zeigt:
- Fig. 1: eine perspektivische Ansicht eines Ausführungsbeispiels eines ersten erfindungsgemäßen Beschlags,
- Fig. 2: eine perspektivische Explosionsansicht des Beschlags nach Fig. 1,
- Fig. 3: eine Durchsicht von oben auf eine Grundplatte des Beschlags nach Fig. 1 ohne Applikationen und ohne Aufzüge,
- Fig. 4: eine perspektivische Ansicht eines rechten Aufzugs des Beschlags nach Fig. 1,
- Fig. 5: eine perspektivische Ansicht eines vorderen Aufzugs des Beschlags nach Fig. 1,
- Fig. 6: eine schematische Seitenansicht eines zu beschlagenden Pferds,
- Fig. 7: eine schematische Seitenansicht eines Fußes des Pferds nach Fig. 6 mit Teilen eines Klettverschlusses,
- Fig. 8: einen schematischen Ablaufplan eines Ausführungsbeispiels eines erfindungsgemäßen Verfahrens,
- Fig. 9: eine perspektivische Durchsicht eines weiteren Ausführungsbeispiels eines erfindungsgemäßen Beschlags und
- Fig. 10: eine perspektivische Ansicht eines weiteren Ausführungsbeispiels eines erfindungsgemäßen Beschlags.

### Detaillierte Beschreibung von Ausführungsbeispielen

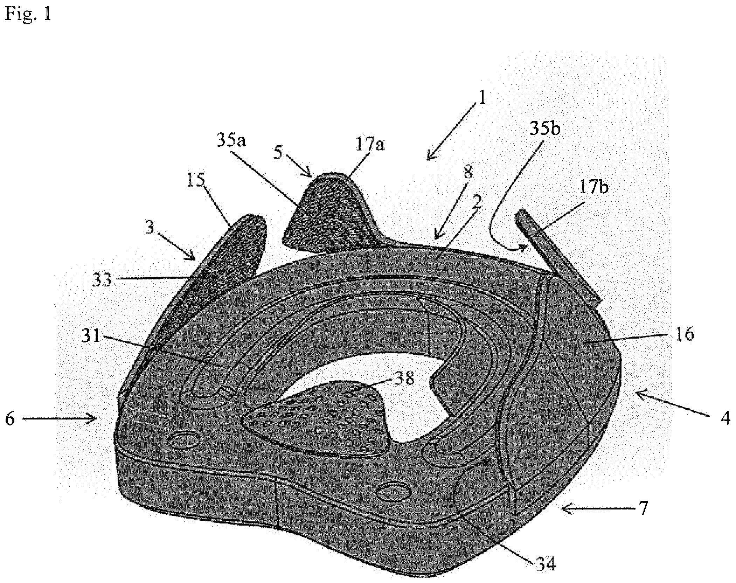

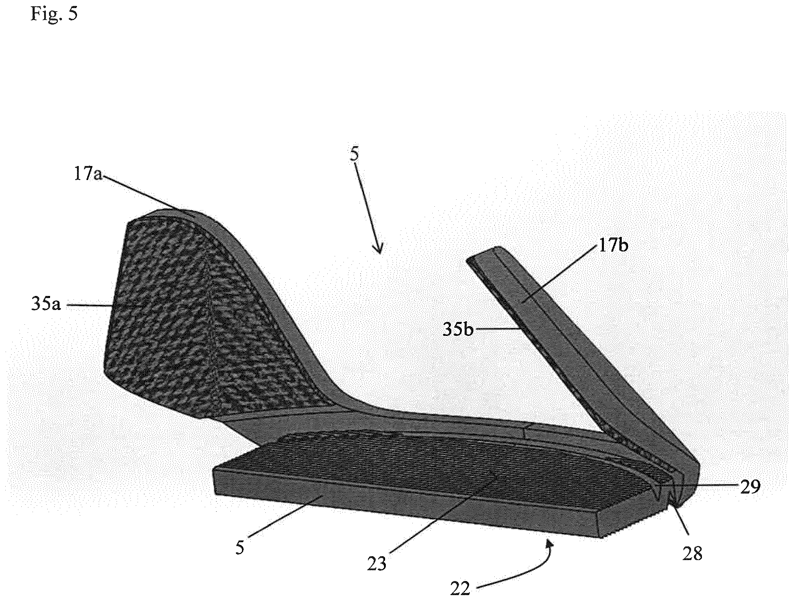

Fig. 1 bis 5 zeigen einen Beschlag 1, welcher eine Grundplatte 2 aus einem Kunststoffmaterial und drei Aufzüge 3 bis 5 umfasst, welche ebenfalls aus einem Kunststoffmaterial hergestellt sind. Die Grundplatte 2 ist mit den Aufzügen 3 bis 5 fest verbunden, wobei ein erster Aufzug 3 an einem linken Randabschnitt 6 der Grundplatte 2 angeordnet ist, ein zweiter Aufzug 4 an einem rechten Randabschnitt 7 der Grundplatte 2 angeordnet ist und ein dritter Aufzug 5 an einem vorderen Randabschnitt 8 der Grundplatte 2 angeordnet ist.

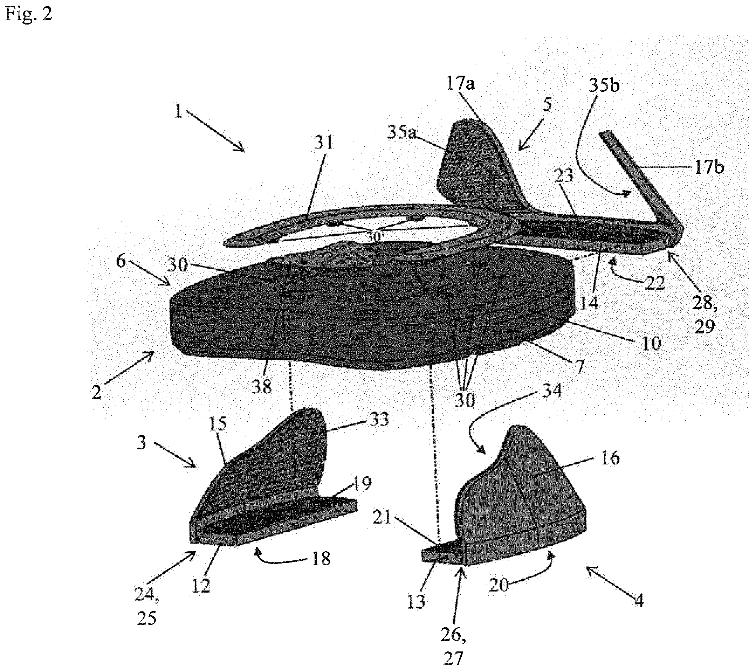

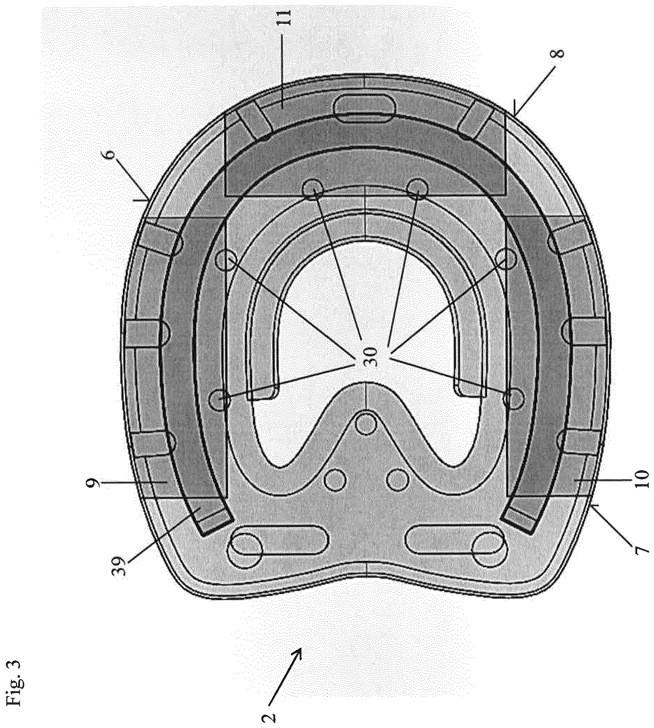

Wie besonders gut aus Fig. 2 und 3 ersichtlich, weist die Grundplatte 2 für jeden der Aufzüge 3 bis 5 einen Schacht 9 bis 11 zur festen bereichsweisen Aufnahme der Aufzüge 3 bis 5 auf, wobei der jeweilige Schacht 9 bis 11 und Aufzug 3 bis 5 dazu eingerichtet sind, reversibel lösbar miteinander verbunden zu werden.

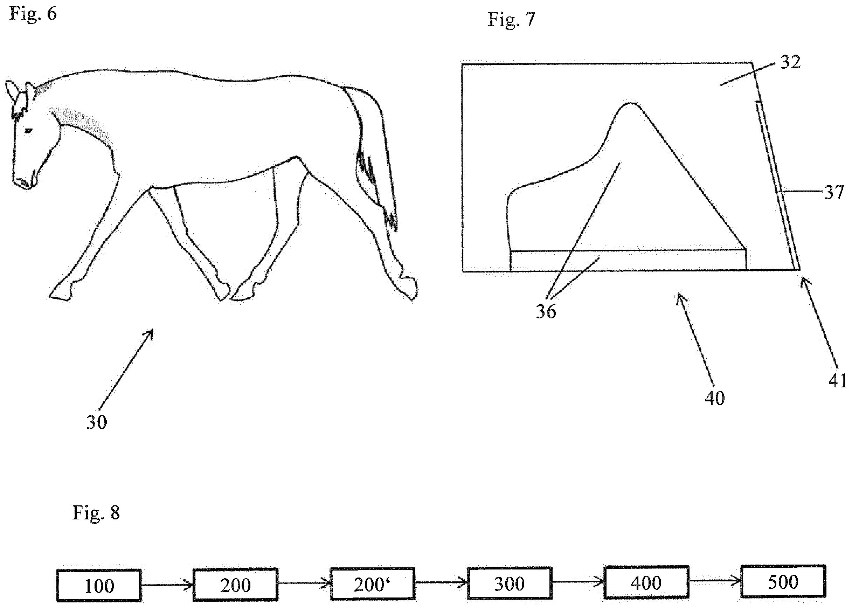

Die Aufzüge 3 bis 5 weisen jeweils einen im Wesentlichen winkelförmigen Querschnitt auf, in dem gezeigten Beispiel einen im Wesentlichen L-förmigen Querschnitt, wobei jeweils ein Hufwand-Schenkel 15, 16, 17a und 17b der Aufzüge 3 bis 5 zur Befestigung an einer durch Fig. 7 gezeigten Hufwand 32 eines durch Fig. 6 gezeigten Pferdes 30 eingerichtet ist und jeweils wenigstens ein Grundplatten-Schenkel 12 bis 14 der jeweiligen Aufzüge 3 bis 5 zur Befestigung an der Grundplatte 2 eingerichtet ist. Der dritte Aufzug 5, welcher an dem vorderen Randabschnitt 8 der Grundplatte 2 angeordnet ist, weist dabei zwei Hufwand-Schenkel 17a und 17b auf, welche derart voneinander beabstandet sind, dass ein durch Fig. 7 gezeigter vorderer Zehenbereich 41 des Hufs 40 des Pferds 30 zumindest bereichsweise freigehalten wird, wenn der Beschlag 1 an der Hufwand 32 des Pferds 30 befestigt und der Huf 40 des Pferds 30 somit beschlagen ist. Alternativ können die Hufwand-Schenkel 17a, 17b auch zu einem einzigen Hufwandschenkel zusammengefasst sein, wobei dann der gesamte Zehenbereich umschlossen ist.

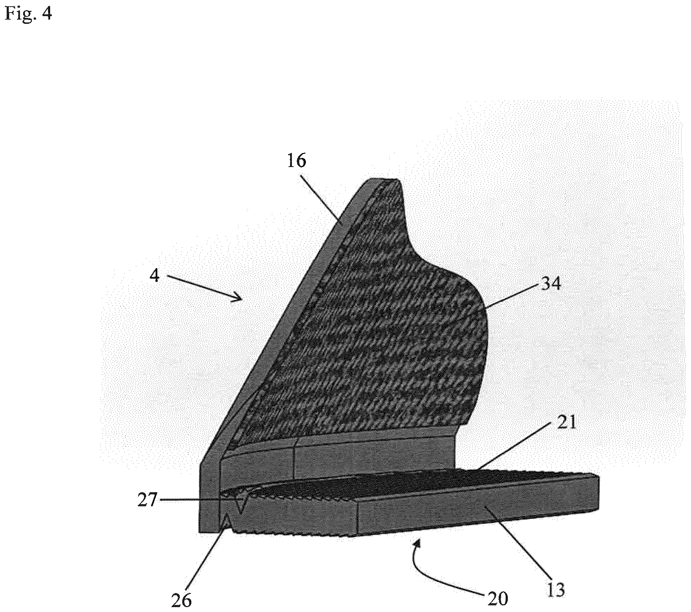

Die Grundplatten Schenkel 12 bis 14 umfassen strukturierte Oberflächen 18 bis 23 mit Zähnen, welche in eine gemeinsame Richtung zeigen. Die Oberflächen der Schächte 9 bis 11 weisen ebenfalls nicht gezeigte Zähne auf, welche in die entgegengesetzte Richtung orientiert sind, wie die Zähne der Grundplatten-Schenkel 12 bis 14. Weiterhin weisen die Grundplatten-Schenkel 12 bis 14 eine ausreichende Materialstärke, um unter Druck in die Schächte 9 bis 11 eingesteckt werden zu können und unter normalen Einsatzbedingungen des Beschlags 1 nicht aus den Schächten 9 bis 11 heraus zu rutschen, da die Zähne der Grundplatten-Schenkel 12 bis 14 in die Zähne der Oberflächen der Schächte 9 bis 11 einrasten können (vgl. insbesondere Fig. 4 für den zweiten Aufzug und 5 für den dritten Aufzug). Durch Aufbringen einer ausreichenden Zugkraft oder durch vorheriges Einbringen von nicht gezeigten Keil- bzw. Schubelementen eines Werkzeugs und einer ausreichenden Druckkraft können die Grundplatten-Schenkel 12 bis 14 jedoch wieder aus den Schächten 9 bis 11 herausgezogen werden, womit eine zwar im normalen Einsatz des Beschlags 1 feste, aber dennoch reversibel lösbare Verbindung zwischen der Grundplatte 2 und den Aufzügen 3 bis 5 bereitgestellt wird. Die Grundplatten-Schenkel 12 bis 14 weisen weiterhin jeweils zwei Einkerbungen 24 bis 29 auf, welche unter Zugbelastung eine elastische seitliche Ausdehnung der Grundplatten-Schenkel 12 bis 14 ermöglichen.

Die Grundplatte 2 weist ferner Applikations-Befestigungsmittel in Form von Öffnungen 30 als Teil eines Klickverschlusses auf, welche zur reversibel lösbaren Befestigung orthopädischer Applikationen, z.B. in Form eines Hufeisens 31 aus einem dämpfenden Kunststoffmaterial an der Grundplatte 2 eingerichtet sind. Alternativ kann beispielsweise auch eine die gesamte Sohle schützende Kunststoffplatte eingeklickt werden. Gegenparts zu den Öffnungen 30 sind auf dem Hufeisen 31 in Form von Pilzköpfen 30' angeordnet.

Fig. 6 und 7 zeigen ein Pferd 30, an dessen Hufen 40 der Beschlag 1 nach Fig. 1 bis 5 sowie Fig. 9 und Fig. 10 angebracht werden kann. Fig. 7 zeigt lediglich schematisch und nicht maßstabsgetreu die Hufwand 32 des Pferds 30 nach Fig. 6.

Wie aus Fig. 1 bis 5 ersichtlich, weisen die Hufwand-Schenkel 15, 16, 17a und 17b der Aufzüge 3 bis 5 Hufwand-Befestigungsmittel in Form von mittels selbstklebender Klebestreifen angeklebten Teilen 33, 34, 35a und 35b von Klettverschlüssen auf, welche zur reversibel lösbaren Befestigung der Hufwand-Schenkel 15, 16, 17a und 17b der Aufzüge 3 bis 5 an der Hufwand 32 des Pferds 30 eingerichtet sind. An der Hufwand 32 des Pferds 30 sind passende Gegenparts 36 und 37 zu den Teilen der Klettverschlussmechanismen 33, 34, 35a und 35b mittels selbstklebender Klebestreifen angeklebt (vgl. Fig. 7), wobei in Fig. 7 aufgrund der Seitenansicht lediglich zwei Gegenparts 36 und 37 gezeigt sind.

Ferner ist eine Strahlunterstützung 38 zur Erzeugung eines variablen Gegendruckes auf einen Strahl des Hufs 40 des zu beschlagenden Pferdes 30 an der Grundplatte 2 mittels eines weiteren Klickverschlusses reversibel wie die hufeisenförmige, stoßdämpfende Applikation 31 an der Grundplatte 2 befestigt. Schließlich ist innerhalb der Grundplatte 2 ein U-förmiges Versteifungselement 39 zur Versteifung der Grundplatte 2 angeordnet, wobei das Versteifungselement 39 in die Grundplatte 2 verankert ist. Dieses stabilisierende Versteifungselement 39 lässt vertikale Bewegungen der seitlichen Hufwände im Sinne eines positiven Hufmechanismus zu.

Fig. 8 zeigt den Ablauf der Verfahrensschritte eines erfindungsgemäßen Verfahrens zum Beschlagen des Pferds 30 nach Fig. 6 mit einem Beschlag 1 gemäß Fig. 1. In einem ersten Verfahrensschritt 100 wird ein Beschlag 1 nach Fig. 1 bereitgestellt, wobei die Grundplatte 2 zuvor an den Huf 40 des Pferds 30 angepasst worden ist, und wobei die Aufzüge 3 bis 5 nach Anpassen der Grundplatte 2 an den Huf 40 des Pferds 30 an der Grundplatte 2 befestigt worden sind. Danach erfolgt in einem zweiten Verfahrensschritt 200 ein Anbringen von Gegenparts 36, 37 zu den Hufwand-Befestigungsmitteln 33, 34, 35a, 35b der Aufzüge 3 bis 5 an der Hufwand 32 des Pferds 30.

Danach werden in einem weiteren Verfahrensschritt 200' die Applikationen 31 und 38 mittels der Öffnungen 30 und der Pilzköpfe 30' an der Grundplatte 2 des Beschlags 1 reversibel lösbar befestigt. Danach erfolgt in einem dritten Verfahrensschritt 300 ein reversibel lösbares Befestigen der Aufzüge 3 bis 5 des Beschlags 1 an der Hufwand 32 des Pferds 30 mittels der Teile der Klettverschlüsse, welche an den Hufwand-Schenkeln 15, 16, 17a und 17b sowie an der Hufwand 32 angebracht sind. Dadurch ist der Beschlag 1 an der Hufwand 32 des Pferds 30 befestigt und die stoßdämpfende Applikation in Form des Hufeisens 31 sowie der Strahlunterstützung 38 befinden sich an den vorgesehenen Positionen an dem Huf 40 des Pferds 30. Der Huf 40 des Pferds 30 ist somit beschlagen.

Um das Hufeisen 31 auszutauschen, erfolgt in einem vierten Verfahrensschritt 400 ein reversibles Lösen der Befestigung der Aufzüge 3 bis 5 von der Hufwand 32, indem von Hand oder mittels eines nicht gezeigten kammartigen Werkzeugs die Teile der Klettverschlüsse 33, 34, 35a, 35b von ihrem jeweiligen Gegenpart 36, 37 seitlich gelöst und anschließend abgeschält werden. Dadurch ist der Beschlag 1 von der Hufwand 32 des Pferds 30 gelöst. Der Huf 40 des Pferds 30 ist somit nicht mehr beschlagen. Anschließend erfolgt in einem fünften Verfahrensschritt 500 das Wiederholen der Schritte 100 und 300 mit einer anderen Grundplatte 2.

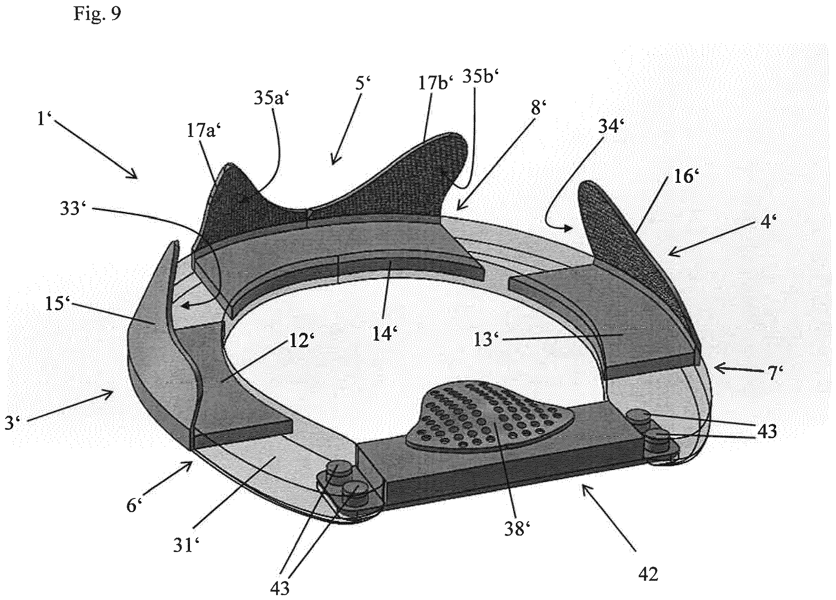

Fig. 9 zeigt einen weiteren Beschlag 1, welcher eine hufeisenförmige Grundplatte 2 z.b. aus Karbon und drei Aufzüge 3 bis 5 umfasst, welche aus einem Kunststoffmaterial hergestellt sind. Die Grundplatte 2 ist mit den Aufzügen 3 bis 5 fest verbunden, wobei ein erster Aufzug 3 an einem linken Randabschnitt 6 der Grundplatte 2 angeordnet ist, ein zweiter Aufzug 4 an einem rechten Randabschnitt 7 der Grundplatte 2 angeordnet ist und ein dritter Aufzug 5 an einem vorderen Randabschnitt 8 der Grundplatte 2 angeordnet ist.

Die Grundplatte 2 weist für jeden der Aufzüge 3 bis 5 einen Schacht zur festen bereichsweisen Aufnahme der Aufzüge 3 bis 5 auf, wobei der jeweilige Schacht und Aufzug 3 bis 5 dazu eingerichtet sind, reversibel lösbar miteinander verbunden zu werden, wie dies weiter oben im Zusammenhang mit den Schächten 9 bis 11 und den Aufzügen 3 bis 5 des Beschlags 1 nach Fig. 1 bis 5 beschrieben ist.

Die Aufzüge 3 bis 5 weisen jeweils einen im Wesentlichen winkelförmigen Querschnitt auf, in dem gezeigten Beispiel einen im Wesentlichen L-förmigen Querschnitt, wobei jeweils ein Hufwand-Schenkel 15, 16, 17a und 17b der Aufzüge 3 bis 5 zur Befestigung an der durch Fig. 7 gezeigten Hufwand 32 des durch Fig. 6 gezeigten Pferds 30 eingerichtet ist und jeweils wenigstens ein Grundplatten-Schenkel 12 bis 14 der jeweiligen Aufzüge 3 bis 5 zur Befestigung an der Grundplatte 2 durch Einschieben in deren Schächte eingerichtet ist. Der dritte Aufzug 5, welcher an dem vorderen Randabschnitt 8 der Grundplatte 2 angeordnet ist, weist dabei zwei Hufwand-Schenkel 17a und 17b auf, welche derart voneinander beabstandet sind, dass der durch Fig. 7 gezeigte vordere Zehenbereich 41 des Hufs 40 des Pferds 30 zumindest bereichsweise freigehalten wird, wenn der Beschlag 1 an der Hufwand 32 des Pferds 30 befestigt und der Huf 40 des Pferds 30 somit beschlagen ist. Die Grundplatten-Schenkel 12 bis 14 können weiterhin jeweils zwei nicht gezeigte Einkerbungen aufweisen (vgl. die ähnlichen Einkerbungen 24 bis 29 gemäß Fig. 2, 4 und 5), welche unter Zugbelastung eine elastische seitliche Ausdehnung der Hufbeschlag-Schenkel 12 bis 14 ermöglichen.

Die Hufwand-Schenkel 15, 16, 17a und 17b der Aufzüge 3 bis 5 weisen ferner Hufwand-Befestigungsmittel in Form von mittels selbstklebender Klebestreifen angeklebten Teilen 33, 34, 35a und 35b von Klettverschlüssen auf, welche zur reversibel lösbaren Befestigung der Hufwand-Schenkel 15, 16, 17a und 17b der Aufzüge 3 bis 5 an der Hufwand 32 des Pferds 30 eingerichtet sind. An der Hufwand 32 des Pferds 30 sind passende Gegenparts 36 und 37 zu den Teilen der Klettverschlüsse 33, 34, 35a und 35b mittels selbstklebender Klebestreifen angeklebt (vgl. Fig. 7), wobei in Fig. 7 aufgrund der Seitenansicht lediglich zwei Gegenparts 36 und 37 gezeigt sind.

Die offen auslaufenden Enden der Grundplatte 2 sind durch ein Brückenelement 42 miteinander verbunden, wodurch die Steifigkeit der Grundplatte 2 und damit des Beschlags 1 erhöht wird. Ferner ist eine Strahlunterstützung 38 zur Erzeugung eines Gegendrucks auf einem Strahl des Hufs 40 des zu beschlagenden Pferds 30 an dem Brückenelement 42 mittels weiterer Klickbindungen 43 reversibel lösbar befestigt. Auf ein Versteifungselement 39 - wie durch Fig. 3 gezeigt - kann in diesem Ausführungsbeispiel verzichtet werden.

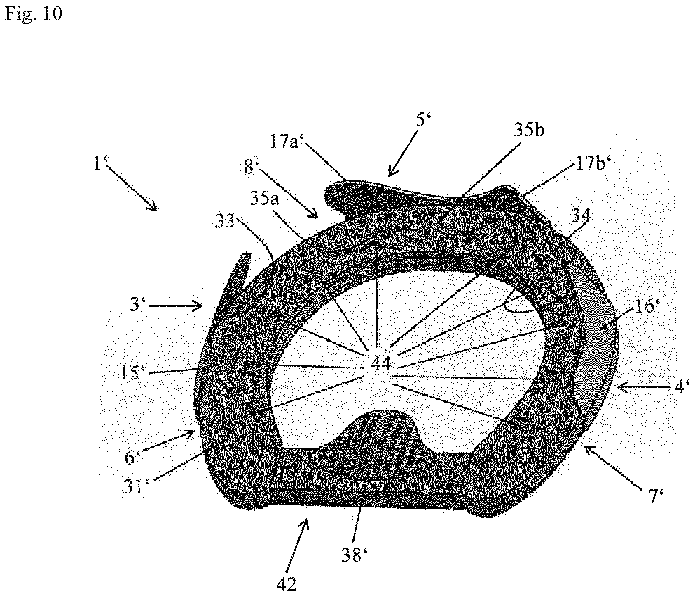

Der durch Fig. 10 gezeigte Beschlag 1 unterschiedet sich von demjenigen nach Fig. 9 dadurch, dass zusätzliche Klickverbindungs-Elemente 44 an der Grundplatte 2 vorgesehen sind, welche ein Einklicken weiterer Applikationen an dem Hufbeschlag 31 ermöglichen.

## Patentansprüche

1. Beschlag (1) für einen Huf (40) eines Equiden (30), umfassend:
- eine Grundplatte (2) und
- Aufzüge (3 bis 5),
wobei
- die Grundplatte (2) mit den Aufzügen (3 bis 5) verbunden ist,
- die Aufzüge (3 bis 5) Hufwand-Befestigungsmittel (33, 34, 35a, 35b) aufweisen, welche dazu eingerichtet sind, die Aufzüge (3 bis 5) reversibel lösbar an einer Hufwand (32) des Equiden (30) zu befestigen,
- die Aufzüge (3 bis 5) einen winkelförmigen Querschnitt aufweisen, wobei jeweils wenigstens ein Hufwand-Schenkel (15, 16, 17a und 17b) der Aufzüge (3 bis 5) zur Befestigung an der Hufwand (32) des Equiden (30) eingerichtet ist und jeweils wenigstens ein Grundplatten-Schenkel (12 bis 14) der Aufzüge (13 bis 15) zur Befestigung an der Grundplatte (2) eingerichtet ist und
- die Grundplatte (2) für die Aufzüge (3 bis 5) je einen Schacht (9 bis 11) zur bereichsweisen Aufnahme des Aufzuges (3 bis 5) aufweist, wobei der Schacht (9 bis 11) und der Aufzug (3 bis 5) dazu eingerichtet sind, reversibel lösbar miteinander verbunden zu werden, **dadurch gekennzeichnet,**
- **dass** die Hufwand-Befestigungsmittel (33,34,35a,35b) einen Teil eines Klettverschlusses (33,34,35a,35b; 36,37) umfassen, und
- **dass** die Grundplatten-Schenkel (12 bis 14) strukturierte Oberflächen (18 bis 23) mit Zähnen aufweisen, welche in eine gemeinsame Richtung zeigen, und Oberflächen der Schächte (9 bis 11) Zähne zur Einrastung in die Zähne der Grundplattenschenkel aufweisen.

2. Beschlag nach Anspruch 1, **dadurch gekennzeichnet, dass** die Grundplatte (2) Applikations-Befestigungsmittel (30) aufweist, welche dazu eingerichtet sind, eine Applikation (31, 38) reversibel lösbar an der Grundplatte (2) zu befestigen.

3. Beschlag (1) nach Anspruch 2, **dadurch gekennzeichnet, dass** die Applikations-Befestigungsmittel einen Teil (30) eines Klickverschlusses (30, 30') umfassen.

4. Beschlag (1) nach einem der vorstehenden Ansprüche, **dadurch gekennzeichnet, dass** der Beschlag (1) drei Aufzüge (3 bis 5) umfasst, wobei ein erster Aufzug (3) an einem linken Randabschnitt (6) der Grundplatte (2) angeordnet ist, ein zweiter Aufzug (4) an einem rechten Randabschnitt (7) der Grundplatte (2) angeordnet ist und ein dritter Aufzug (5) an einem vorderen Randabschnitt (8) der Grundplatte (2) angeordnet ist.

5. Beschlag (1) nach Anspruch 4, **dadurch gekennzeichnet, dass** der dritte Aufzug (5), welcher an dem vorderen Randabschnitt (8) der Grundplatte (2) angeordnet ist, zwei Hufwand-Schenkel (17a und 17b) aufweist, welche derart voneinander beabstandet sind, dass ein vorderer Zehenbereich (41) des Hufs (40) des Equiden (30) zumindest bereichsweise freigehalten wird, wenn der Beschlag (1) an der Hufwand (32) des Equiden (30) befestigt und der Huf (40) des Equiden (30) somit beschlagen ist.

6. Beschlag (1) nach einem der vorstehenden Ansprüche, **dadurch gekennzeichnet, dass** der wenigstens eine Aufzug (3 bis 5) jeweils wenigstens eine Einkerbung (24 bis 29) im Bereich einer Verbindung mit der Grundplatte (2) aufweist.

7. Beschlag (1) nach einem der vorstehenden Ansprüche, **dadurch gekennzeichnet, dass** eine Strahlunterstützung (38) an der Grundplatte (2) zur Erzeugung eines Gegendruckes auf einem Strahl des Hufes (40) eines zu beschlagenden Equiden (30) befestigt ist.

8. Beschlag (1) nach einem der vorstehenden Ansprüche, **dadurch gekennzeichnet, dass** die Grundplatte (2) und der wenigstens eine Aufzug (3 bis 5) aus einem Kunststoff gefertigt sind.

9. Beschlag (1) nach einem der vorstehenden Ansprüche, **dadurch gekennzeichnet, dass** die Grundplatte (2) ein U-förmiges Versteifungselement (39) zur Versteifung der Grundplatte (2) aufweist.

10. Beschlag (1) nach einem der vorstehenden Ansprüche, **dadurch gekennzeichnet, dass** die Grundplatte (2) hufeisenförmig ist und aus faserverstärktem Kunststoff gefertigt ist.

11. Verfahren zum Beschlagen eines Hufes (40) eines Equidens (30) mit einem Beschlag (1) umfassend die Verfahrensschritte:
(100) Bereitstellen eines Beschlags (1) nach einem der vorstehenden Ansprüche,
wobei die Grundplatte (2) zuvor an den Huf (40) des Equiden (30) angepasst worden ist, und
wobei die Aufzüge (3 bis 5) nach Anpassen der Grundplatte (2) an den Huf (40) des Equiden (30) an der Grundplatte (2) befestigt worden sind,
(200) Anbringen von Gegenparts (36, 37) zu Hufwand-Befestigungsmitteln (33, 34, 35a, 35b) der Aufzüge (3 bis 5) an der Hufwand (32) des Equiden (30),
(300) reversibel lösbares Befestigen wenigstens eines Aufzugs (3 bis 5) des Beschlags (1) an einer Hufwand (32) des Equiden (30) mittels der Hufwand-Befestigungsmittel (33, 34, 35a, 35b; 36 und 37).

12. Verfahren nach Anspruch 11, **dadurch gekennzeichnet, dass** vor dem reversibel lösbaren Anbringen der Aufzüge (3 bis 5) des Beschlags (1) an der Hufwand (32) des Equiden (30) mittels der Hufwand-Befestigungsmittel (15, 16, 17a, 17b) ein reversibel lösbares Befestigen von Applikationen (31; 38) auf der Grundplatte erfolgt.

## Claims

1. Shoeing (1) for a hoof (40) of an equine (30), comprising:
- a base plate (2) and
- clips (3 to 5),
- the base plate (2) being connected to the clips (3 to 5),
- the clips (3 to 5) having hoof wall fastening means (33, 34, 35a, 35b) which are designed to reversibly detachably fasten the clips (3 to 5) to a hoof wall (32) of the equine (30),
- the clips (3 to 5) having an angular cross section, at least one hoof wall leg (15, 16, 17a and 17b) of the clips (3 to 5) being designed in each case to be fastened to the hoof wall (32) of the equine (30) and at least one base plate leg (12 to 14) of the clips (13 to 15) being designed in each case to be fastened to the base plate (2), and
- the base plate (2) having a slot (9 to 11) for each of the clips (3 to 5) that is intended to receive the clips (3 to 5) in regions, the slot (9 to 11) and the clip (3 to 5) being designed to be reversibly detachably interconnected,
**characterised in that**
- the hoof wall fastening means (33, 34, 35a, 35b) comprise part of a hook-and-loop closure (33, 34, 35a, 35b; 36, 37), and
- **in that** the base plate legs (12 to 14) have structured surfaces (18 to 23) comprising teeth which point in a common direction, and surfaces of the slots (9 to 11) have teeth for engaging the teeth of the base plate legs.

2. Shoeing according to claim 1, **characterised in that** the base plate (2) has application fastening means (30) which are designed to reversibly detachably fasten an application (31, 38) to the base plate (2).

3. Shoeing (1) according to claim 2, **characterised in that** the application fastening means comprise part (30) of a click closure (30, 30').

4. Shoeing (1) according to any of the preceding claims, **characterised in that** the Shoeing (1) comprises three clips (3 to 5), a first clip (3) being arranged on a left-hand edge portion (6) of the base plate (2), a second clip (4) being arranged on a right-hand edge portion (7) of the base plate (2), and a third clip (5) being arranged on a front edge portion (8) of the base plate (2).

5. Shoeing (1) according to claim 4, **characterised in that** the third clip (5), which is arranged on the front edge portion (8) of the base plate (2), has two hoof wall legs (17a and 17b) which are spaced apart from one another such that a front toe region (41) of the hoof (40) of the equine (30) is kept clear at least in regions when the Shoeing (1) is fastened to the hoof wall (32) of the equine (30) and the hoof (40) of the equine (30) is therefore shoed.

6. Shoeing (1) according to any of the preceding claims, **characterised in that** the at least one clip (3 to 5) has in each case at least one notch (24 to 29) in the region of connection to the base plate (2).

7. Shoeing (1) according to any of the preceding claims, **characterised in that** a frog support (38) is fastened to the base plate (2) for generating a counter-pressure on a frog of the hoof (40) of an equine (30) to be shoed.

8. Shoeing (1) according to any of the preceding claims, **characterised in that** the base plate (2) and the at least one clip (3 to 5) are produced from a plastics material.

9. Shoeing (1) according to any of the preceding claims, **characterised in that** the base plate (2) has a U-shaped reinforcement element (39) for reinforcing the base plate (2).

10. Shoeing (1) according to any of the preceding claims, **characterised in that** the base plate (2) is horseshoe-shaped and is produced from a fibre-reinforced plastics material.

11. Method for shoeing a hoof (40) of an equine (30) with a Shoeing (1), the method comprising the method steps of:
(100) providing a Shoeing (1) according to any of the preceding claims, wherein the base plate (2) is first adapted to the hoof (40) of the equine (30), and wherein the clips (3 to 5) are fastened to the base plate (2) after the base plate (2) has been adapted to the hoof (40) of the equine (30),
(200) attaching counterparts (36, 37) to hoof wall fastening means (33, 34, 35a, 35b) of the clips (3 to 5) to the hoof wall (32) of the equine (30),
(300) reversibly detachably fastening at least one clip (3 to 5) of the Shoeing (1) to a hoof wall (32) of the equine (30) by means of the hoof wall fastening means (33, 34, 35a, 35b; 36 and 37).

12. Method according to claim 11, **characterised in that** applications (31; 38) are reversibly detachably fastened to the base plate before the clips (3 to 5) of the Shoeing (1) are reversibly detachably attached to the hoof wall (32) of the equine (30) by means of the hoof wall fastening means (15, 16, 17a, 17b).

## Revendications

1. Ferrure (1) pour un sabot (40) d'un équidé (30), comprenant :
- une plaque de base (2) et
- des élévations (3 à 5),
dans laquelle
- la plaque de base (2) est assemblée aux élévations (3 à 5),
- les élévations (3 à 5) comportent des moyens de fixation de paroi de sabot (33, 34, 35a, 35b) qui sont adaptés pour fixer les élévations (3 à 5) sur une paroi de sabot (32) de l'équidé (30) de manière amovible et réversible,
- les élévations (3 à 5) ont une section en forme d'équerre, dans laquelle respectivement au moins une aile de paroi de sabot (15, 16, 17a et 17b) des élévations (3 à 5) est adaptée pour être fixée sur la paroi de sabot (32) de l'équidé (30), et respectivement au moins une aile de plaque de base (12 à 14) des élévations (13 à 15) est adaptée pour être fixée sur la plaque de base (2), et
- la plaque de base (2) pour les élévations (3 à 5) comporte respectivement une encoche (9 à 11) pour recevoir l'élévation (3 à 5) dans certaines zones, dans laquelle l'encoche (9 à 11) et l'élévation (3 à 5) sont adaptées pour être assemblées l'une à l'autre de manière amovible et réversible, **caractérisée en ce que**
- les moyens de fixation de paroi de sabot (33, 34, 35a, 35b) comprennent une partie de fermeture auto-agrippante (33, 34, 35a, 35b, 36, 37), et
- les ailes de la plaque de base (12 à 14) comportent des surfaces structurées (18 à 23) avec des dents qui pointent dans une direction commune, et des surfaces des encoches (9 à 11) comportent des dents pour un encliquetage dans les dents des ailes de la plaque de base.

2. Ferrure selon la revendication 1, **caractérisée en ce que** la plaque de base (2) comporte des moyens de fixation d'application (30), qui sont adaptés pour fixer une application (31, 38) sur la plaque de base (2) de manière amovible et réversible.

3. Ferrure (1) selon la revendication 2, **caractérisée en ce que** les moyens de fixation d'application comprennent une partie (30) d'une fermeture à déclic (30, 30').

4. Ferrure (1) selon l'une des revendications précédentes, **caractérisée en ce que** la ferrure (1) comprend trois élévations (3 à 5), dans laquelle une première élévation (3) est agencée sur une partie de bord gauche (6) de la plaque de base (2), une deuxième élévation (4) est agencée sur une partie de bord droit (7) de la plaque de base (2) et une troisième élévation (5) est agencée sur une partie de bord avant (8) de la plaque de base (2).

5. Ferrure (1) selon la revendication 4, **caractérisée en ce que** la troisième élévation (5) qui est agencée sur la partie de bord avant (8) de la plaque de base (2), comporte deux ailes de paroi de sabot (17a et 17b) qui sont espacées l'une de l'autre de telle sorte qu'une zone d'orteil avant (41) du sabot (40) de l'équidé (30) est maintenue au moins dans certaines zones, lorsque la ferrure (1) est fixée sur la paroi de sabot (32) de l'équidé (30), et que le sabot (40) de l'équidé (30) est ainsi ferré.

6. Ferrure (1) selon l'une des revendications précédentes, **caractérisée en ce que** la au moins une élévation (3 à 5) comporte respectivement au moins une rainure (24 à 29) dans la zone d'assemblage avec la plaque de base (2).

7. Ferrure (1) selon l'une des revendications précédentes, **caractérisée en ce qu'**un support de fourchette (38) est fixé sur la plaque de base (2) pour générer une contre-pression sur une fourchette du sabot (40) d'un équidé (30) devant être ferré.

8. Ferrure (1) selon l'une des revendications précédentes, **caractérisée en ce que** la plaque de base (2) et la au moins une élévation (3 à 5) sont fabriquées à partir d'une matière plastique.

9. Ferrure (1) selon l'une des revendications précédentes, **caractérisée en ce que** la plaque de base (2) comporte un élément de renfort en forme de U (39) pour renforcer la plaque de base (2).

10. Ferrure (1) selon l'une des revendications précédentes, **caractérisée en ce que** la plaque de base (2) est en forme de fer à cheval et est fabriquée à partir d'une matière plastique renforcée par des fibres.

11. Procédé pour ferrer un sabot (40) d'un équidé (30) avec une ferrure (1), comportant les étapes de procédé consistant à :
(100) fournir une ferrure (1) selon l'une des revendications précédentes, la plaque de base (2) ayant été préalablement ajustée au sabot (40) de l'équidé (30) et les élévations (3 à 5) ayant été fixées sur la plaque de base (2) après l'ajustement de la plaque de base (2) au sabot (40) de l'équidé (30),
(200) appliquer des parties complémentaires (36, 37) des moyens de fixation de paroi de sabot (33, 34, 35a, 35b) des élévations (3 à 5) sur la paroi de sabot (32) de l'équidé (30),
(300) fixer de manière amovible et réversible au moins une élévation (3 à 5) de la ferrure (1) sur une paroi de sabot (32) de l'équidé (30) en utilisant les moyens de fixation de paroi de sabot (33, 34, 35a, 35b ; 36 et 37).

12. Procédé selon la revendication 11, **caractérisé en ce qu'**avant d'appliquer de manière amovible et réversible les élévations (3 à 5) de la ferrure (1) sur la paroi de sabot (32) de l'équidé (30) en utilisant les moyens de fixation de paroi de sabot (15, 16, 17a, 17b), des applications (31 ; 38) sont fixées sur la plaque de base de manière amovible et réversible.
